# EUROPÄISCHE PATENTSCHRIFT

(11) **EP 0 515 947 B1**
(45) Veröffentlichungstag und Bekanntmachung des Hinweises auf die Patenterteilung: **09.08.1995**
(21) Anmeldenummer: 92108393.7
(22) Anmeldetag: 19.05.1992
(51) Int. Cl.: B65H 27/00, F16C 32/06, F16C 13/00

(54) **Walze zum Führen einer Warenbahn**
Roller for guiding a web
Rouleau pour le guidage d'une bande

(30) Priorität: 28.05.1991 DE 4117388
(43) Veröffentlichungstag der Anmeldung: 02.12.1992
(73) Patentinhaber: KOENIG & BAUER-ALBERT AKTIENGESELLSCHAFT, 97080 Würzburg (DE)
(72) Erfinder: Barrois, Claus Dieter, W-8771 Erlenbach (DE)

(56) Entgegenhaltungen:
- FR-A- 2 162 932
- NL-A- 8 500 514
- US-A- 4 206 953

## Beschreibung

Die Erfindung betrifft eine Walze zum Führen einer Warenbahn, beispielsweise aus Papier, gemaß dem Oberbegriff des Patentanspruches 1.

Durch die FR-PS 21 62 932 ist eine gattungsgemäße Walze zum Führen einer Warenbahn bekanntgeworden. Auf einem feststehenden, hohlen Stützkörper mit kreisrundem Querschnitt ist eine geführt umlaufende Hülse aufgefädelt. Ein, die Reibung zwischen Hülse und Stützkörper verminderndes Druckmedium wird durch einen Hohlraum des Stützkörpers und durch über die Länge der Hülse hin verteilte Zuführungen in einen Hohlraum zwischen dem Stützkörper und der Hülse zugeführt und strömt an den Enden der Hülse ab.

Der Erfindung liegt die Aufgabe zugrunde, eine Walze zum Führen einer Papierbahn unter Verwendung eines rotierbaren rohrförmigen Körpers, auf dessen Innenfläche ein druckbeaufschlagtes Medium wirkt, zu schaffen, die reibungsarm, biegestabil, und dichtungslos ist.

Erfindungsgemäß wird diese Aufgabe durch die Merkmale des Anspruchs 1 gelöst. Zweckmäßige Ausgestaltungen der Erfindung sind den Unteransprüchen zu entnehmen.

Die Vorteile der erfindungsgemäßen Walze zum Führen einer Warenbahn bestehen insbesondere darin, daß eine leichte Hülse ohne großes Massenträgheitsmoment verwendet werden kann, welche sich infolge der Anordnung eines Stützkörpers in axialer Richtung nicht durchbiegt, so daß sich die Papierbahn auch nicht seitlich versetzt.

Infolge eines geringen Reibungskoeffizienten der erfindungsgemäßen Walze gegenüber einer kugelgelagerten Walze wird ein Schlupf der Papierbahn gegenüber der Hülse vermieden, was zu einer hohen Druckgenauigkeit bei intermittierendem Betrieb mit Papiervorwärts- und rückwärtsbewegung führt. Infolge des Einsatzes eines flüssigen oder gasförmigen Lagermediums entfällt der Verschleiß von Lagern.

Trotz des Einsatzes des Mediums Öl oder Luft werden bisher erforderliche Dichtungen vermieden.

Der Gegenstand der Erfindung kann auch mit Vorteil für Papierleitwalzen bei Rotationsdruckmaschinen großer Bahnbreiten eingesetzt werden, da die erfindungsgemäßen Walzen auf Grund ihrer inneren Stabilität mit kleinem Durchmesser und reibungsarm ausgeführt werden können.

Von Vorteil ist auch der Einsatz der erfindungsgemäßen Walze als Zugwalze bei notwendiger Papierbahnvorwärts- und rückwärtsbewegung der Maschine - genannt Go and Stop Betrieb - da hierdurch ebenfalls geringe Massenträgheitsmomente gefordert sind.

Die Erfindung soll nachstehend an mehreren Ausführungsbeispielen näher erläutert werden. In den zugehörigen Zeichnungen zeigen:
- Fig. 1: einen Längsschnitt durch eine erfindungsgemäße Walze;
- Fig. 2: den Schnitt A-A nach Fig. 1;
- Fig. 3: einen Längsschnitt gemäß Fig. 1 mit der Darstellung eines Ausführungsbeispieles einer Führung;
- Fig. 4: einen Längsschnitt gemäß Fig. 1 mit der Darstellung eines weiteren Ausführungsbeispieles einer Führung;
- Fig. 5: einen Längsschnitt gemäß Fig. 1 mit der Darstellung eines weiteren Ausführungsbeispieles einer Führung;
- Fig. 6: einen Längsschnitt gemäß Fig. 1 mit der Darstellung eines weiteren Ausführungsbeispieles einer Führung sowie eines Stützkörpers;
- Fig. 7: die Ansicht B nach Fig. 6

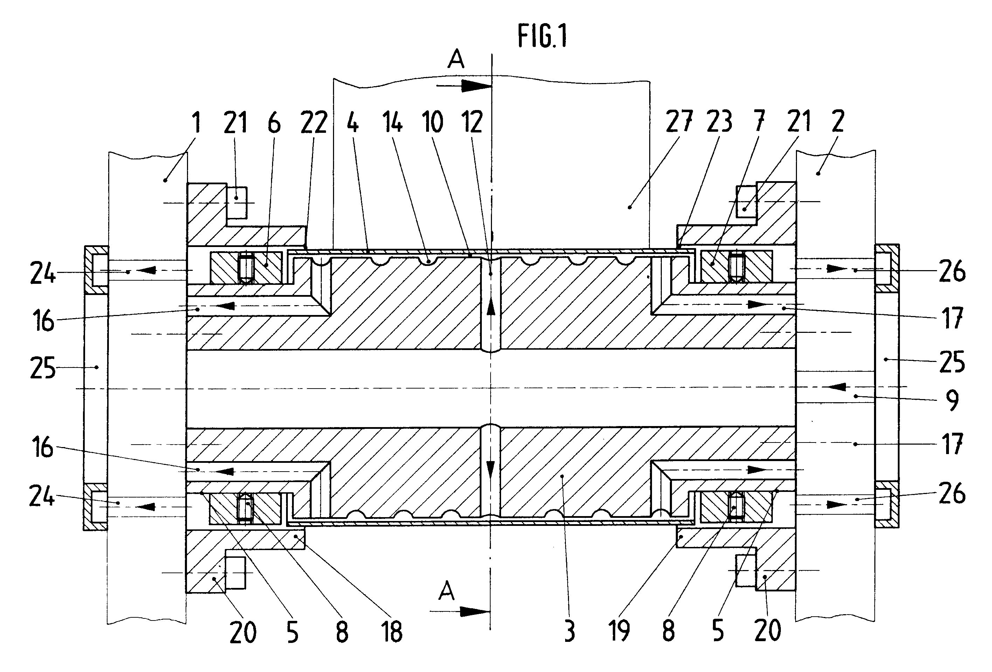

Gemäß Fig. 1 ist ein Längsschnitt durch eine erfindungsgemäße Walze dargestellt. Ein beiderseits in den Seitenwänden 1; 2 des Maschinengestells gehaltener zylinderförmiger Stützkörper 3 ist rohrförmig ausgebildet, und von einer hohlzylinderförmigen Hülse 4 aus einem dünnen Blech umgeben. Auf dein Stützkörper 3 befinden sich beidseitig in der Nähe der Seitenwände 1; 2 Abdrehungen 5, auf denen jeweils eine ringförmige Führung 6; 7 mittels Schrauben 8 gegen die Hülse 4 einstellbar befestigt ist. Diese Führungen 6; 7 dienen beiderseits als Anschlag für die Hülse 4. Zwischen dem Stützkörper 3 und der Hülse 4 befindet sich ein druckbeaufschlagtes Medium 10, beispielsweise Öl, welches die Hülse 4 auf dem Stützkörper 3 aufschwimmen läßt. Dieses Medium 10 wird durch eine zentrale Zuführung 9 in der Seitenwand 2 zugeführt. Das Medium 10 gelangt in den zylindrischen Hohlraum 11, von wo aus es in Pfeilrichtung über radial verlaufende Zuleitungen 12 zur Oberfläche des Stützkörpers 3 gelangt und auf dieser spiralförmig durch Labyrinthnuten 14 verteilt wird. Das als Medium 10 verwendete Öl besitzt dabei, wie bei Druckmaschinen üblich, einen Druck von 60 bis 250 bar, der an der Zuführung 9 entsteht. Zwecks Vermeidung des Austritts von Öl an den Rändern bzw. Enden der Hülse 4, sind an den Enden im Stützkörper 3 radial verlaufende Ableitungen 16; 17 angeordnet. Weiterhin befinden sich in den Seitenwänden 1; 2 in Richtung Hülse 4 weisende und zentrisch zur Hülse 4 verlaufende ringförmige Abdeckungen 18; 19, welche die Hülse 4 beidseitig ringförmig überdecken. Diese Befestigungen 20 sind mittels Schrauben 21 an den Seitenwänden 1; 2 angebracht. Zwischen den Abdeckungen 18; 19 und den Enden der Hülse 4 ist im Betriebszustand jeweils ein Spalt 22; 23 gebildet, welcher mit einer Unterdruckleitung 24; 26 in Verbindung steht. Durch diese Anordnung kann eine Dichtung, die wiederum Reibung erzeugen würde, entfallen. Diese Unterdruckleitungen 24; 26 münden in die Unterdruckleitungen 25 und verhindern, daß durch den Spalt 22; 23 Öl austritt und auf die Oberfläche der Hülse 4 gelangt, was zu unerwünschten Wirkungen auf die Papierbahn 27 führen würde, die von der Oberfläche der Hülse 4 geführt wird.

Die Unterdruckleitungen 24; 25; 26 stehen mit einem nicht dargestellten Unterdruckerzeuger, beispielsweise von der Druckmaschine, in Verbindung. Das Öl-Luftgemisch wird einem Ölabscheider zwecks Rückgewinnung des Öles zugeführt. Die Ableitungen 16; 17 stehen mit einem nicht dargestellten Öltank in Verbindung, von wo aus die Zuführung 9 über eine Ölpumpe mit Drucköl beaufschlagt wird. Im Betriebszustand ist der Ölkreislauf über die Zuführung 9, den Hohlraum 11, die Zuleitungen 12, über die Labyrinthnuten 14 zu den Ableitungen 16; 17 und der nicht dargestellten Ölpumpe geschlossen. Die Hülse 4 ist somit auf dem Stützkörper 3 schwimmend gelagert.

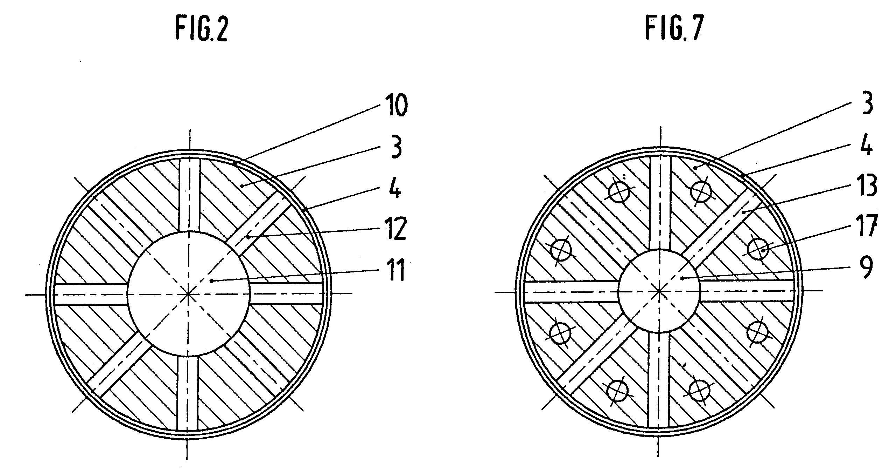

In Fig. 2 ist der Schnitt A-A nach Fig. 1 gezeigt.

Die nachfolgenden Darstellungen zeigen Ausführungsvarianten zur Ausbildung des Stützkörpers sowie der Hülse 4, ohne dabei die vorgehend beschriebene Wirkungsweise zu verändern.

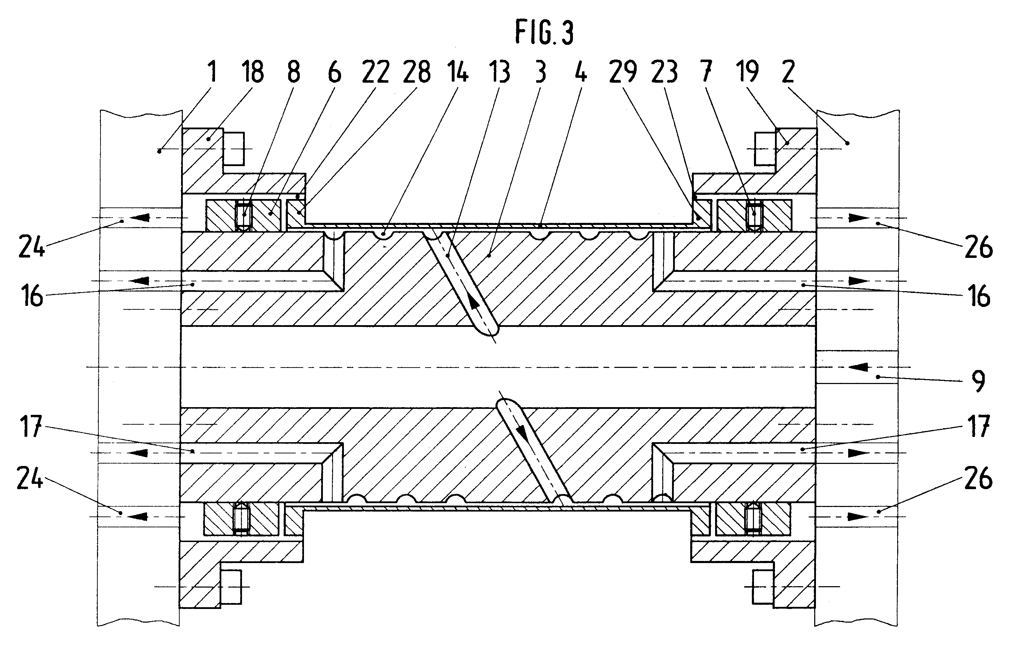

Gemäß Fig. 3 ist analog Fig. 1 ein Längsschnitt durch eine erfindungsgemäße Walze gezeigt, mit der Besonderheit, daß die hohlzylinderförmige Hülse 4 an den Stirnseiten ringförmige Anlaufkanten 28; 29 besitzt, die mit den ringförmigen Führungen 6; 7 in Wirkverbindung stehen. Die Zuleitung 13 verläuft abweichend von Fig. 1 und 2 nicht parallel zu den Seitenwänden 1; 2, sondern schräg. Es ist eine stabile beidseitige Führung der Hülse 4 gewährleistet.

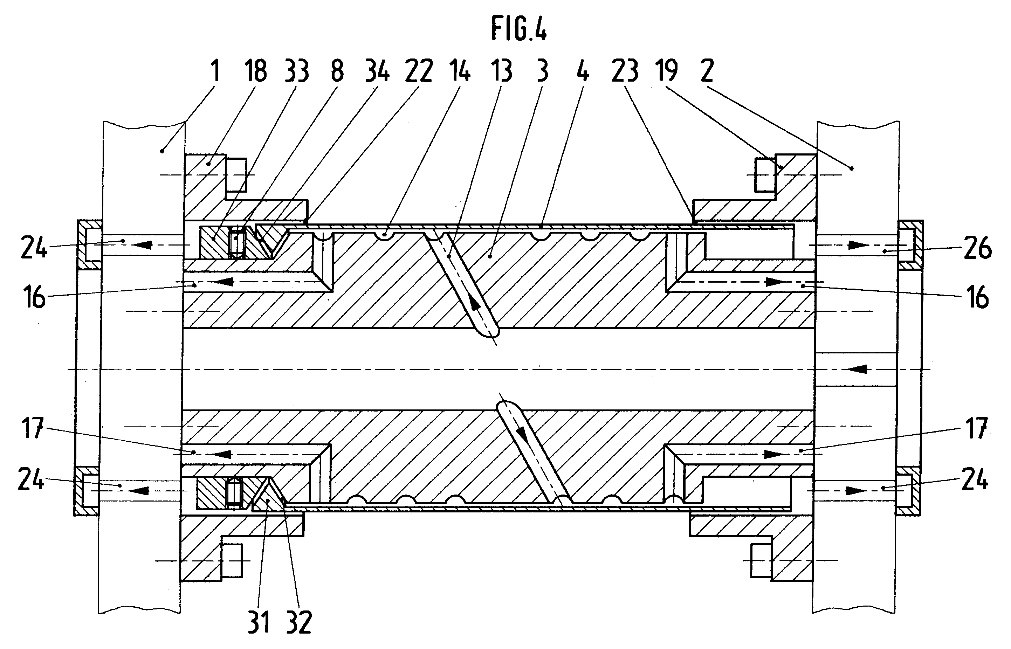

In Fig. 4 ist analog Fig. 1 ein Längsschnitt durch eine erfindungsgemäße Walze gezeigt, mit der Besonderheit, daß die hohlzylinderförmige Hülse 4 an einer Stirnseite einen ringförmigen Flansch 31 aufweist, der im Querschnitt keilförmig ausgebildet ist. Dieser Flansch 31 wird in einer Keilnut geführt, welche einerseits aus einer angeschrägten Abdrehung 32 des zylinderförmigen Stützkörpers 3 und andererseits aus einem abgeschrägten ringförmigen Anschlag 33 besteht, welcher mittels Schrauben 8 gegen den Flansch 31 einstellbar ist. Um den im Querschnitt keilförmig ausgebildeten Flansch 31 herum ist ein Kanal 34 gebildet, durch welchen Lecköl abgesaugt wird. Somit ist eine ausreichende Führung gegeben.

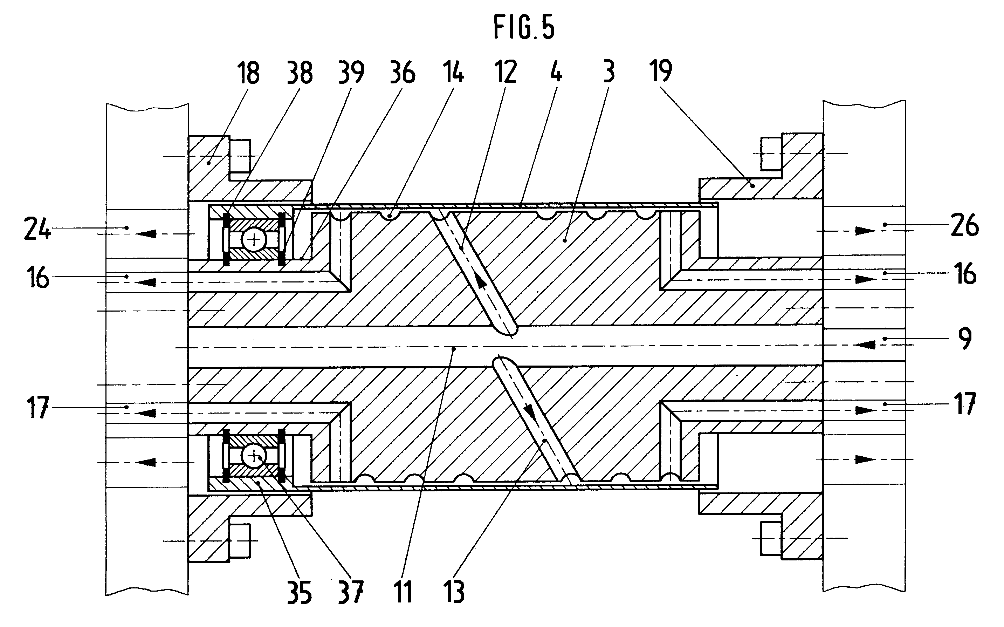

In Fig. 5 ist analog Fig. 1 ein Längsschnitt durch eine erfindungsgemäße Walze gezeigt, mit der Besonderheit, daß die hohzylinderförmige Hülse 4 an einer Stirnseite einnen ringförmigen Flansch 35 aufweist, der im Querschnitt rechteckig ausgebildet ist. Zwischen diesem ringförmigen Flansch 35 und einer Abdrehung 36 auf der Stirnseite des Stützkörpers 3 befindet sich als axiale Führung ein Festlager 37, was durch ein Kugellager gebildet ist. Das Festlager 37 wird durch zwei in Nuten gehaltene Seeger-Stützringe 38; 39 fixiert. Somit ist die Hülse 4 ausreichend auf dein Stützkörper 3 geführt.

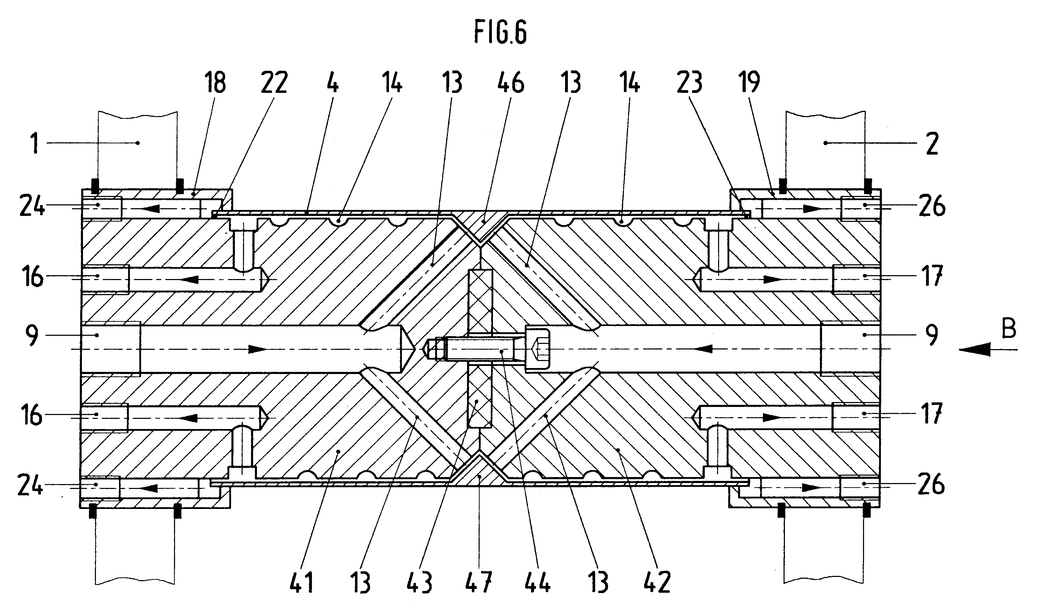

In Fig. 6 ist analog Fig. 1 ein Längsschnitt durch eine erfindungsgemäße Walze gezeigt, mit der Besonderheit, daß der Stützkörper 3 aus zwei axial hintereinander angeordneten zylindrischen Teilen besteht, einem Stützkörperteil 41 und einem Stützkörperteil 42. Beide Stützkörperteile 41; 42 sind spiegelbildlich mit den Stirnflächen mittels einer Zentrierung 43 und einer Schraube 44 verbunden. Die Stützkörperteile 41; 42 weisen jeweils eine Zuführung 9 für das Medium auf. Die Zuführungen 9 verzweigen sich und sind als radial verlaufende Zuleitungen 12; 13 gegen eine radial am Umfang verlaufende Keilnut 46 gerichtet. Die Keilnut 46 befindet sich an der Verbindungsstelle beider Stützkörperteile 41; 42 und wird je zur Hälfte von beiden Stützkörperteilen 41; 42 gebildet, dadurch, daß beide Stützkörperteile 41; 42 jeweils eine schräge Abdrehung besitzen. Die miteinander verbundenen Stützkörperteile 41; 42 sind an den anderen Enden in axialer Richtung in Seitenwänden 1, 2 gehalten. Die hohlzylinderförmige Hülse 4 umgibt beide Stützkörperteile 41; 42 bis zu den Abdeckungen 18, 19 und ist im Betriebszustand drehbeweglich auf diesen gelagert. Die Hülse 4 besitzt mittig, am inneren Umfang eine radial verlaufende, im Querschnitt keilförmige Führung 47, die mit den beiden Stützkörperteilen 41; 42 in Wirkverbindung steht. Die Stützkörperteile 41; 42 weisen ebenfalls spiralförmige am Umfang verlaufende Labyrinthnuten 14 auf, die zu den schon bei den anderen Ausführungsbeispielen genannten Ableitungen 16; 17 führen. Zwischen den freien Enden der Stützkörperteile 41, 42 und den Seitenwänden 1, 2 befinden sich die die Stützkörperteile 41; 42 axial umfassenden Abdeckungen 18; 19, die in den Seitenwänden 1; 2 befestigt sind. Diese Abdeckungen 18; 19 überlappen die Stirnseiten der Hülse 4, um aus den Spalten 22; 23 etwaig austretendes Lecköl über die Unterdruckleitungen 24; 26 abzufangen. Die Zuführung 9, die Zuleitungen 13 und die Ableitungen 16; 17 können als Bohrungen ausgeführt sein. Der Stützkörper 3 bzw. Stützkörperteile 41; 42 können aus einem Material bestehen, das Notlaufeigenschaften besitzt, im Falle des Ausbleibens des Mediums 10 während des Betriebszustandes der Walze. Die Stützkörpen können aus Messing bestehen.

Im Betriebszustand wird, wie bereits bei Fig. 1 dargelegt, über die Zuleitungen 9 das Medium 10 zugeführt. Das Medium 10 verteilt sich über die Zuleitungen 13 und trifft auf die ringförmige Führung 47 in der Keilnut 46 und breitet sich beidseits über die Labyrinthnuten 14 jeweils in Richtung Seitenwände 1; 2 aus, und wird über die Ableitung 16; 17 über den Kreislauf zurückgeführt.

In Fig. 7 wird die Ansicht B nach Fig. 6 gezeigt.

Die erfindungsgemäße Walze kann auch als Zugwalze, zusammen mit einer Anpreßwalze, bei solchen Rotationsdruckmaschinen eingesetzt werden, die kurzzeitig die Papierbahn vor- und rückwärts bewegen, da durch die erfindungsgemäße Walze keine oder nur ganz geringe Reibungsverluste entstehen. Hierzu ist es erforderlich, die Walze mit einem Gleichstromantrieb zu versehen, so wie das in der DE-PS 31 35 696 beschrieben ist.

### Teileliste

- 1: Seitenwand
- 2: Seitenwand
- 3: Stützkörper
- 4: Hülse
- 5: Abdeckung
- 6: Führung
- 7: Führung
- 8: Schraube
- 9: Zuführung
- 10: Medium
- 11: Hohlraum
- 12: Zuleitung
- 13: Zuleitung
- 14: Labyrinthnuten
- 15: -
- 16: Ableitung
- 17: Ableitung
- 18: Abdeckung
- 19: Abdeckung
- 20: Befestigung
- 21: Schraube
- 22: Spalt
- 23: Spalt
- 24: Unterdruckleitung
- 25: Unterdruckleitung
- 26: Unterdruckleitung
- 27: Papierbahn
- 28: Anlaufkante
- 29: Anlaufkante
- 30: -
- 31: Flansch
- 32: Abdrehung
- 33: Anschlag
- 34: Kanal
- 35: Flansch
- 36: Abdrehung
- 37: Festlager
- 38: Seeger-Stützring
- 39: Seeger-Stützring
- 40: -
- 41: Stützkörperteil
- 42: Stützkörperteil
- 43: Zentrierung
- 44: Schraube
- 45: -
- 46: Keilnut
- 47: Führung

## Patentansprüche

1. Walze zum Führen einer Warenbahn, beispielsweise aus Papier, für eine Bahn mit einem zylinderförmigen, feststehenden, hohlen Stützkörper (3) und einer auf diesem umlaufenden, mittels Führungen (6, 28; 7, 29; 31 , 32; 47, 46) axial geführten Hülse (4), wobei ein das Gleiten der (4) Hülse erleichterndes Medium durch einen Hohlraum (9) dem Stützkörper (3) und durch über die Länge der Hülse (4) hin verteilte Zuführungen (13; 14) für das Medium in den zwischen dem Stützkörper (3) und der Hülse (4) befindlichen Raum eingeführt wird und an den Enden der Hülse (4) aus diesem Raum abströmt, dadurch gekennzeichnet, daß die Hülse (4) zwei offene Enden aufweist, daß die offenen Enden von je einer, an das Ende der Hülse (4) angepaßten, sie in geringem Abstand umschließenden, einen Unterdruck aufweisenden ringförmigen Abdeckung (18, 19) umschlossen angeordnet sind, und daß zwischen den Abdeckungen (18, 19) und dem Stützkörper (3) Unterdruckleitungen (24; 26) angeordnet sind.

2. Walze nach Anspruch 1, dadurch gekennzeichnet, daß der Stützkörper (3) drehfest in Seitenwänden (1; 2) eines Maschinengestells gehalten ist.

3. Walze nach Anspruch 1 oder 2, dadurch gekennzeichnet, daß der Stützkörper (3) in axialer Richtung eine oder mehrere Zuführungen (9) für ein Medium (10) besitzt, die vom Inneren des Stützkörpers (3) radial zum Umfang des Stützkörpers (3) verlaufen und dort mit Labyrinthnuten (14) in Verbindung stehen, daß die Labyrinthnuten (14) in Richtung Seitenwand (1; 2) geführt sind und in radial angeordnete Ableitungen (16; 17) münden.

4. Walze nach Anspruch 1 oder 3, dadurch gekennzeichnet, daß der Stützkörper (3) als Hohlzylinder ausgeführt ist.

5. Walze nach einem der Ansprüche 1 bis 3, dadurch gekennzeichnet, daß der Stützkörper (3) aus zwei axial hintereinander angeordneten zylindrischen Stützkörperteilen (41; 42) besteht, die spiegelbildlich an den Stirnflächen mittels einer Zentrierung (43) und einer Schraube (44) verbunden sind.

6. Walze nach einem der Ansprüche 1 bis 4, dadurch gekennzeichnet, daß der zylindrische Hohlraum (11) im Stützkörper (3) als Zuführung (9) für das Medium (10) verwendbar ist.

7. Walze nach einem der Ansprüche 1 bis 6, dadurch gekennzeichnet, daß der Stützkörper (3) aus einem Material mit Notlaufeigenschaften besteht.

8. Walze nach Anspruch 7, dadurch gekennzeichnet, daß als Material Messing verwendet wird.

9. Walze nach einem der Ansprüche 1 bis 8, dadurch gekennzeichnet, daß die Hülse (4) als Hohlzylinder ausgeführt, koaxial und drehbeweglich auf dem Stützkörper (3) angeordnet ist.

10. Walze nach einem der Ansprüche 1 bis 9, dadurch gekennzeichnet, daß der Stützkörper (3) beiderseits in der Nähe der Seitenwände (1; 2) Abdrehungen (5) aufweist, auf denen mittels Schrauben (8) ringförmige Führungen (6; 7) einstellbar befestigt sind, die mit den Stirnseiten der Hülse (4) in Berührung stehen.

11. Walze nach einem der Ansprüche 1 bis 9, dadurch gekennzeichnet, daß auf dem Stützkörper (3) in der Nähe der Seitenwände (1; 2) ringförmige Führungen (6; 7) mittels Schrauben (8) einstellbar befestigt sind, die mit an den Stirnseiten der Hülse (4) angeordneten ringförmigen Flanschen (28; 29) in Berührung stehen.

12. Walze nach einem der Ansprüche 1 bis 9, dadurch gekennzeichnet, daß der Stützkörper (3) einseitig in der Nähe der Seitenwand (1) eine abgeschrägte Abdrehung (32) aufweist, auf welcher mittels Schrauben (8) ein ringförmiger, einseitig abgeschrägter Anschlag (33) einstellbar befestigt ist, der mit einem an einer Stirnseite der Hülse (4) angeordneten ringförmigen Flansch (31) in Berührung steht.

13. Walze nach Anspruch 12, dadurch gekennzeichnet, daß der Flansch (31) einen keilförmigen Querschnitt besitzt, und in einer Keilnut geführt ist, die von der abgeschrägten Abdrehung (32) und dem abgeschrägten Anschlag (33) gebildet ist.

14. Walze nach einem der Ansprüche 1 bis 9, dadurch gekennzeichnet, daß der Stützkörper (3) einseitig in der Nähe der Seitenwand (1) eine Abdrehung (36) aufweist, worauf ein Festlager (37) angeordnet ist, das sich gegen einen an der Stirnseite der Hülse (4) befindlichen Flansch (35) abstützt.

15. Walze nach Anspruch 14, dadurch gekennzeichnet, daß das Festlager (37) zwischen dem Stützkörper (3) und der Hülse (4) durch Seeger-Stützringe (38; 39) gehalten ist.

16. Walze nach einem der Ansprüche 1 bis 9, dadurch gekennzeichnet, daß die Hülse (4) mittig am inneren Umfang eine ringförmig verlaufende Führung (47) mit keilförmigem Querschnitt aufweist, die mit einer Keilnut (46) des zweiteiligen Stützkörpers (3) in Verbindung steht.

17. Walze nach Anspruch 16, dadurch gekennzeichnet, daß die Keilnut (46) je zur Hälfte von den beiden Stützkörperteilen (41; 42) gebildet ist.

18. Walze nach einem der Ansprüche 1 bis 5, dadurch gekennzeichnet, daß die Zuführungen (9), die Zuleitungen (13) sowie die Ableitungen (16; 17) für das Medium (10) als Bohrungen ausgeführt sind.

19. Walze nach einem der Ansprüche 1 bis 18, dadurch gekennzeichnet, daS Öl als Medium (10) verwendbar ist.

20. Walze nach Anspruch 19, dadurch gekennzeichnet, daß die Zuführungen (9) und die Ableitungen (16; 17) mit einem Druckölkreislauf und die Unterdruckleitungen (24; 26) sowie eine Unterdruckleitung (25) mit einem Saugluftkreislauf mit Ölabscheider in Verbindung stehen.

21. Walze nach einem der Ansprüche 1 bis 20, dadurch gekennzeichnet, daß die Walze als angetriebene Zugwalze bei Rollenrotationsdruckmaschinen ausgebildet ist, wobei diese Walze mit einem Gleichstromantrieb und mit einer Anpreßwalze in Verbindung steht.

## Claims

1. Roller for guiding a web of material, for example of paper, for a web with a cylindrical stationary hollow supporting body (3) and a tube (4) which rotates thereon and is axially guided by means of guides (6, 28; 7, 29; 31, 32; 47, 46), wherein a medium which simplifies the sliding of the tube (4) is introduced through a cavity (9) to the supporting body (3) and through feeders (13; 14) distributed over the length of the tube (4) for the medium into the space located between the supporting body (3) and the tube (4) and issues from this space at the ends of the tube (4), characterised in that the tube (4) has two open ends, in that the open ends are surrounded by a respective annular cover (18, 19) which is adapted to the end of the tube (4), surrounds it with slight spacing and has a vacuum, and in that vacuum lines (24; 26) are arranged between the covers (18, 19) and the supporting body (3).

2. Roller according to Claim 1, characterised in that the supporting body (3) is held non-rotatably in lateral walls (1; 2) of a machine frame.

3. Roller according to Claim 1 or 2, characterised in that the supporting body (3) has one or more feeders (9) for a medium (10) in an axial direction which extend from the interior of the supporting body (3) radially to the periphery of the supporting body (3) and communicate there with labyrinthine grooves (14), and in that the labyrinthine grooves (14) are guided in the direction of the lateral wall (1; 2) and open in radially arranged discharge pipes (16; 17).

4. Roller according to Claim 1 or 3, characterised in that the supporting body (3) is designed as a hollow cylinder.

5. Roller according to one of Claims 1 to 3, characterised in that the supporting body (3) consists of two cylindrical supporting body parts (41; 42) which are arranged axially behind one another and are connected symmetrically at the end faces by a centering means (43) and a screw (44).

6. Roller according to one of Claims 1 to 4, characterised in that the cylindrical cavity (11) in the supporting body (3) can be used as a feeder (9) for the medium (10).

7. Roller according to one of Claims 1 to 6, characterised in that the supporting body (3) consists of a material having emergency running properties.

8. Roller according to Claim 7, characterised in that brass is used as material.

9. Roller according to one of Claims 1 to 8, characterised in that the tube (4) is designed as a hollow cylinder and is arranged coaxially and rotatably on the supporting body (3).

10. Roller according to one of Claims 1 to 9, characterised in that the supporting body (3) has on both sides in the vicinity of the lateral walls (1; 2), turned regions (5) on which annular guides (6; 7) are adjustably fastened by means of screws (8), the guides (6; 7) making contact with the end faces of the tube (4).

11. Roller according to one of Claims 1 to 9, characterised in that annular guides (6; 7) are adjustably fastened on the supporting body (3) in the vicinity of the lateral walls (1; 2) by means of screws (8) which make contact with annular flanges (28; 29) arranged at the end faces of the tube (4).

12. Roller according to one of Claims 1 to 9, characterised in that the supporting body (3) has, on one side in the vicinity of the lateral wall (1), a bevelled turned region (32) on which an annular stop (33) which is bevelled on one side is adjustably fastened by screws (8), the stop (33) making contact with an annular flange (31) arranged on one end face of the tube (4).

13. Roller according to Claim 12, characterised in that the flange (31) has a wedge-shaped cross-section and is guided in a keyway formed by the bevelled turned region (32) and the bevelled stop (33).

14. Roller according to one of Claims 1 to 9, characterised in that the supporting body (3) has, on one side in the vicinity of the lateral wall (1), a turned region (36) on which there is arranged a fixed bearing (37) which rests against a flange (35) located on the end face of the tube (4).

15. Roller according to Claim 14, characterised in that the fixed bearing (37) is held between the supporting body (3) and the tube (4) by Seeger supporting rings (38; 39).

16. Roller according to one of Claims 1 to 9, characterised in that the tube (4) has, centrally on the internal periphery, an annularly extending guide (47) with a wedge-shaped cross-section which is connected to a keyway (46) of the two-part supporting body (3).

17. Roller according to Claim 16, characterised in that the respective halves of the keyway (46) are formed by the two supporting body parts (41; 42).

18. Roller according to one of Claims 1 to 5, characterised in that the feeders (9), the supply lines (13) and the discharges lines (16; 17) for the medium (10) are designed as bores.

19. Roller according to one of Claims 1 to 18, characterised in that oil can be used as medium (10).

20. Roller according to Claim 19, characterised in that the feeders (9) and the discharge lines (16; 17) are connected to a compressed oil circuit and the vacuum lines (24; 26) and a vacuum line (25) to a vacuum circuit with oil separator.

21. Roller according to one of Claims 1 to 20, characterised in that the roller is designed as a driven tension roller in rotary web printing presses, this roller being connected to a direct current drive and to a pressure roller.

## Revendications

1. Rouleau pour le guidage d'une bande de matériau, par exemple en papier, pour une bande ayant un corps d'appui (3) creux, cylindrique, fixe et une douille (4) tournant sur celui-ci, guidée axialement au moyen de guidages (6, 28; 7, 29; 31, 32; 47, 46), un fluide, facilitant le coulissement de la douille (4), étant introduit, par un espace creux (9), dans le corps d'appui (3) et, au moyen de passages d'amenée (13; 14) répartis sur la longueur de la douille (4), prévus pour le fluide, introduit dans l'espace existant entre le corps d'appui (3) et la douille (4) et s'évacuant de cet espace aux extrémités de la douille (4), caractérisé en ce que la douille (4) présente deux extrémités ouvertes, en ce que les extrémités ouvertes sont entourées chacune par un recouvrement (18, 19) annulaire adapté à l'extrémité de la douille (4), entourant la douille (4) à faible distance, soumis à un vide, et en ce qu'entre les recouvrements (18, 19) et le corps d'appui (3) sont disposées des conduites à vide (24; 26).

2. Rouleau selon la revendication 1, caractérisé en ce que le corps d'appui (3) est maintenu bloqué en rotation dans des parois latérales (1; 2) d'un bâti-machine.

3. Rouleau selon la revendication 1 ou 2, caractérisé en ce que le corps d'appui (3) comporte en direction axiale un ou plusieurs passages d'amenée (9) pour un fluide (10), ces passages d'amenée s'étendant de l'intérieur du corps d'appui (3), en direction radiale vers la périphérie du corps d'appui (3) et y étant reliés à des gorges de labyrinthe (14) de manière que les gorges de labyrinthe (14) soient guidées dans la direction de la paroi latérale (1; 2) et débouchent dans des conduites d'évacuation (16; 17) disposées radialement.

4. Rouleau selon la revendication 1 ou 3, caractérisé en ce que le corps d'appui (3) est réalisé sous forme de cylindre creux.

5. Rouleau selon l'une des revendications 1 à 3, caractérisé en ce que le corps d'appui (3) est constitué de deux parties de corps d'appui (41; 42) cylindriques, disposées axialement l'une derrière l'autre, reliées, en répondant à une symétrie spéculaire, aux faces frontales au moyen d'un centrage (43) et d'une vis (44).

6. Rouleau selon l'une des revendications 1 à 4, caractérisé en ce que l'espace creux (11) cylindrique ménagé dans le corps d'appui (3) est utilisable comme passage d'amenée (9) pour le fluide (10).

7. Rouleau selon l'une des revendications 1 à 6, caractérisé en ce que le corps d'appui (3) est constitué d'un matériau présentant une tenue avec graissage insuffisant.

8. Rouleau selon la revendication 7, caractérisé en ce qu'on utilise comme matériau du laiton.

9. Rouleau selon l'une des revendications 1 à 8, caractérisé en ce que la douille (4) est réalisée sous forme de cylindre creux, disposé coaxialement et mobile en rotation sur le corps d'appui (3).

10. Rouleau selon l'une des revendications 1 à 9, caractérisé en ce que le corps d'appui (3) présente, des deux côtés et à proximité des parois latérales (1; 2), des saignées circulaires (5) sur lesquelles sont fixés, de façon réglable au moyen de vis, des guidages (6; 7) annulaires en contact avec les faces frontales de douille (4).

11. Rouleau selon l'une des revendications 1 à 9, caractérisé en ce que, sur le corps d'appui (3), à proximité des parois latérales (1; 2), sont fixés, de façon réglable au moyen de vis, des guidages (6; 7) annulaires, en contact avec des brides (28; 29) annulaires disposées sur les faces frontales de la douille (4).

12. Rouleau selon l'une des revendications 1 à 9, caractérisé en ce que le corps d'appui (3) présente d'un côté, à proximité de la paroi latérale (1), un décrochement circulaire (32) chanfreiné, sur lequel une butée (33) annulaire, chanfreinée sur un côté, est fixée de façon réglable au moyen de vis (8) et est en contact avec une bride (31) annulaire, disposée sur une face frontale de la douille (4).

13. Rouleau selon la revendication 12, caractérisé en ce que la bride (31) a une section transversale cunéiforme et est guidée dans une gorge à section cunéiforme constituée par la saignée circulaire (32) chanfreinée et la butée (33) chanfreinée.

14. Rouleau selon l'une des revendications 1 à 9, caractérisé en ce que le corps d'appui (3) présente, d'un côté, à proximité de la paroi latérale (1), une saignée circulaire (36) sur laquelle est disposé un palier fixe (37) qui prend appui contre une bride (35) se trouvant en face frontale de la douille (4).

15. Rouleau selon la revendication 14, caractérisé en ce que le palier fixe (37) est maintenu entre le corps d'appui (3) et la douille (4) au moyen de bagues d'appui en circlip (38; 39).

16. Rouleau selon l'une des revendications 1 à 9, caractérisé en ce que la douille (4) présente, à mi-longueur sur cette périphérie intérieure, un guidage (47) s'étendant sous forme annulaire avec une section transversale cunéiforme et relié à une gorge (46) cunéiforme du corps d'appui (3) en deux parties.

17. Rouleau selon la revendication 16, caractérisé en ce que la gorge (46) cunéiforme est constituée pour moitié par chacune des deux parties du corps d'appui (41; 42).

18. Rouleau selon l'une des revendications 1 à 5, caractérisé en ce que les passages d'amenée (9), les conduites d'amenée (13), ainsi que les conduites d'évacuation (16; 17) destinées au fluide (10), sont réalisés sous forme de perçages.

19. Rouleau selon l'une des revendications 1 à 18, caractérisé en ce que l'on peut utiliser comme fluide (10) de l'huile.

20. Rouleau selon la revendication 19, caractérisé en ce que les passages d'amenée (9) et les conduites d'évacuation (16; 17) sont reliés à un circuit d'huile sous pression et les conduites à vide (24; 26), ainsi qu'une conduite à vide (25), sont reliées à un circuit de vide équipé d'un séparateur d'huile.

21. Rouleau selon l'une des revendications 1 à 20, caractérisé en ce que le rouleau est réalisé sous forme de rouleau de traction entraîné dans le cas de machines à imprimer rotatives à rouleau, ce rouleau étant relié à un entraînement à courant continu et à un rouleau de pressage.
